# EUROPÄISCHE PATENTANMELDUNG

(11) **EP 1 806 459 A1**
(43) Veröffentlichungstag der Anmeldung: **11.07.2007**
(21) Anmeldenummer: 06019668.0
(22) Anmeldetag: 20.09.2006
(51) Int. Cl.: E04B 1/94, E04B 2/74

(54) **Brandschutzbauelement**

(30) Priorität: 22.09.2005 DE 102005045517
(71) Anmelder: Reuter, Martin, 63584 Gruendau (DE)
(72) Erfinder: Reuter, Martin, 63584 Gruendau (DE)
(74) Vertreter: Wolf, Michael

(57) **Zusammenfassung**

Die Erfindung betrifft ein Brandschutzbauelement zur brandschutztechnischen Abgrenzung zweier Raumbereiche (1, 2) voneinander, umfassend ein zum einen Raumbereich (1) weisendes, mindestens feuerhemmend ausgebildetes Brandschutzplattenelement (3). Nach der Erfindung ist eine zum anderen Raumbereich (2) weisende, mittels mindestens eines Verbindungselements (5) am Brandschutzplattenelement (3) fest, aber lösbar angeordnete Metallplatte (4) vorgesehen.

## Beschreibung

Die Erfindung betrifft ein Brandschutzbauelement zur brandschutztechnischen Abgrenzung zweier Raumbereiche voneinander gemäß dem Oberbegriff des Patentanspruchs 1.

Selbstverständlich gibt es eine Vielzahl von Brandschutzbauelement der eingangs genannten Art. Diese bestehen regelmäßig aus einem zum einen Raumbereich weisenden, mindestens feuerhemmend (bessere Ausführungsform: feuerbeständig) ausgebildeten Brandschutzplattenelement. Dieses Plattenelement ist dabei je nach Einsatzzweck aus unterschiedlichen Werkstoffen gebildet. Zu Auswahl stehen beispielsweise Porenbeton, Silikat-Baustoffe oder (wenn auch seltener) Gips und andere mindestens feuerhemmende Baustoffe.

Nachfolgend werden einige bekannte Lösungen kurz vorgestellt:

Die DE 198 00 559 A1 beschreibt eine vor Brandeinwirkung geschützte Betonkonstruktion. Diese besteht aus einer plattenartigen Brandschutzverkleidung, bei der die Platten mittels Verbindungselementen zusammengehalten und vor dem Betonieren an der Armierung der noch herzustellenden Betonwand fixiert werden. Beim Betonieren verschwinden die Verbindungselemente hinter den Platten in der Betonwand.

Die DE 102 55 265 A1 beschreibt eine Brandschutzbeschichtung für Bauten aus Beton, bei der auf die zu schützende Oberfläche ein mineralischer Bindernittelschaum aufgespritzt wird.

Die DE 296 01 777 U1 beschreibt eine Brandschutzdämmung, bei der vor die Betonwand ein mit einem Dämmschichtbildner beschichtetes Lochblech positioniert ist. Im Brandfall schäumt der Dämmschichtbildner auf und schützt so die Betonwand. Im Normalfall ist andererseits aufgrund des Lochbleches für eine gute Hinterlüftung der Brandschutzdämmung gesorgt.

Die DE 100 21 444 A1 beschreibt eine textilbewährte Betonschale zur Verkleidung von Tunnelwänden. Diese Schale weist zur Schalldämmung Lochungen und dahinterliegend eine schallabsorbierende Steinwollmatte auf.

Diese Konstruktionen sind alle recht aufwendig.

Der Erfindung liegt die Aufgabe zugrunde, ein Brandschutzbauelement zu schaffen, das bei einfachster Konstruktion einerseits den brandschutztechnischen Normen und Bestimmungen gerecht wird, andererseits aber auch staub- und wasserdicht ist, und zwar bei gleichzeitig optisch ansprechendem Erscheinungsbild.

Diese Aufgabe ist mit einem Brandschutzbauelement der eingangs genannten Art durch die im Kennzeichen des Patentanspruchs 1 aufgeführten Merkmale gelöst.

Nach der Erfindung ist also vorgesehen, dass eine zum anderen Raumbereich weisende, mittels mindestens eines verbindungselements am Brandschutzplattenelement fest, aber lösbar angeordnete Metallplatte vorgesehen ist.

Mit anderen Worten ausgedrückt, ist nach der Erfindung eine Funktionseinheit vorgesehen, die aus einem Brandschutzplattenelement und einer Metallplatte (vorzugsweise Edelstahl) besteht, wobei die Lösbarkeit der Verbindung der beiden Elemente zueinander, wie nachfolgend noch erläutert wird, von elementarer Bedeutung ist.

Wären das Brandschutzplattenelement und die Metallplatte fest und unlösbar miteinander verbunden, hätte dies in einem Brandfall zur Folge, dass das sich unter der Wärmeeinwirkung verformende Metallblech Kräfte in das Brandschutzplattenelement einleitet und sich dieses deshalb eventuell aus seiner Verankerung löst. Im Brandfall kommt es aber gerade darauf an, dass sich das Brandschutzplattenelement nicht bewegt und an der vorgebenen Position verbleibt. Die Funktion des für die Optik und für die Staub- und Wasserdichtheit verantwortlichen Metallblechs tritt im Brandfall jedoch verglichen zur eigentlichen Brandschutzfunktion zurück, d. h. im Brandfall wird durch die gezielte Ablösbarkeit der Metallplatte gewährleistet, dass das Brandschutzplattenelement ohne Beeinträchtigung durch mögliche, von der Metallplatte hervorgerufene Krafteinwirkungen seine Hauptfunktion erfüllen kann.

Um diese Funktion zu realisieren, ist das Verbindungselement so ausgebildet, dass es die Metallplatte sicher am Brandschutzplattenelement halten kann, und zwar solange, bis Kräfte auftreten, die durch eine wärmebedingte Verformung der Metallplatte ein Ablösen der Verbindung indizieren. Alternativ kann die Ablösung auch dadurch erfolgen, dass das verbindungselement schmilzt.

Andere vorteilhafte Weiterbildungen des erfindungsgemäßen Brandschutzbauelements sind in den abhängigen Patentansprüchen angegeben.

Das erfindungsgemäße Brandschutzbauelement einschließlich seiner vorteilhaften Weiterbildungen gemäß der abhängigen Patentansprüche wird nachfolgend anhand der zeichnerischen Darstellung mehrerer Ausführungsbeispiele näher erläutert.

Es zeigt
- Figur 1: im Schnitt das Grundprinzip des erfindungsgemäßen Brandschutzbauelements als Funktioneinheit;
- Figur 2: im Schnitt ein als Tür ausgebildetes Brandschutzbauelement;
- Figur 3: im Schnitt ein als Trennwand ausgebildetes Brandschutzbauelement;
- Figur 4: im Schnitt eine Trennwand gemäß Figur 3 in einer Einbuchtung eines Fahrzeugtunnels;
- Figur 5: im Schnitt nochmals in anderer Darstellung das erfindungsgemäße Brandschutzbauelement als Funktionseinheit;
- Figur 6: im Schnitt eine Deckeneckkonstruktion; und
- Figur 7: im Schnitt eine Wandanschlusskonstruktion.

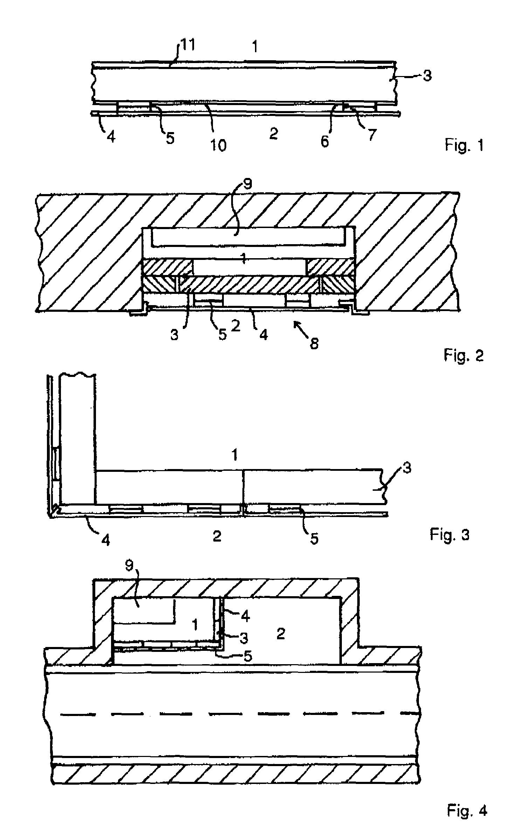

Alle in den Figuren 1 bis 7 dargestellten Brandschutzbauelemente zur brandschutztechnischen Abgrenzung zweier Raumbereiche 1, 2 voneinander umfassen ein zum einen Raumbereich 1 weisendes, mindestens feuerhemmend ausgebildetes Brandschutzplattenelement 3, wobei mindestens feuerhemmend, wie weiter oben bereits angedeutet, auch die brandschutztechnisch bessere Option feuerbeständig umfasst.

Wesentlich für das erfindungsgemäße Brandschutzbauelement ist nun, dass eine zum anderen Raumbereich 2 weisende, mittels mindestens eines verbindungselements 5 am Brandschutzplattenelement 3 fest, aber lösbar angeordnete Metallplatte 4 (vorzugsweise Edelstahl) vorgesehen ist.

Wie oben erwähnt, kommt es dabei insbesondere darauf an, dass das Verbindungselement 5 ein definiertes Ablösen (bei einer genau vordefinierten Kraft oder durch Schmelzen) der Metallplatte 4 vom Brandschutzplattenelement 3 gewährleistet. Wie insbesondere aus Figur 1 gut ersichtlich, ist dazu vorteilhaft vorgesehen, dass das Verbindungselement 5 zweiteilig ausgebildet ist, wobei ein erstes Teil 6 am Brandschutzplattenelement 3 und ein zweites Teil 7 an der Metallplatte 4 befestigt ist. Zwischen den beiden Teilen 6, 7 ist in diesem Fall ein entsprechender, nicht dargestellter Rastmechanismus oder dergleichen angeordnet, wobei in diesem Zusammenhang ferner vorteilhaft vorgesehen ist, dass das verbindungselement 5 aus Kunststoff (Thermoplast) gebildet ist. Als besonders vorteilhaft haben sich dabei die an sich bekannten, sogenannten Keku-Beschläge erwiesen (siehe http://www.keku.de). Zur Befestigung des verbindungselements 5 am Brandschutzbauelement 3 und an der Metallplatte 4 ist darüber hinaus vorteilhaft eine Verklebung vorgesehen.

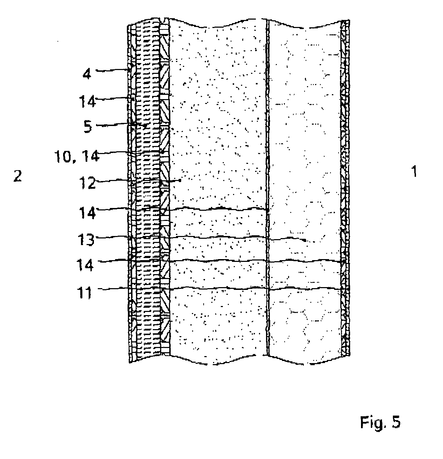

Bezüglich des Brandschutzplattenelements 3 ist vorteilhaft vorgesehen, dass dieses wahlweise aus Porenbeton oder einem Silikat-Baustoff gebildet ist. Die Dicke des Elements sollte mindestens 50 mm betragen, kann je nach Anwendungsfall aber auch mehr oder weniger sein. Darüber hinaus ist vorteilhaft vorgesehen, dass das Brandschutzplattenelement 3 mehrschichtig ausgebildet ist (siehe auch Figur 5), wobei eine Hochtemperaturdämmschicht 12 seitens der Metallplatte (Richtung des zweiten Raumbereiches 2) und eine Niedertemperaturdämmschicht 13 in Richtung des ersten Raumbereiches 1 angeordnet ist. Die beiden Schichten sind mit einer verklebung 14 miteinander verbunden.

Bezüglich der Metallplatte ist vorgesehen, dass diese mindestens 2 mm dick und, wie erwähnt, vorzugsweise aus Edelstahl ausgebildet ist, um möglichen Belastungen, beispielsweise in einem Kraftfahrzeugtunnel (siehe Figur 4), gut standhalten zu können.

Wie insbesondere aus Figur 2 und 4 ersichtlich, kann das Brandschutzbauelement insbesondere zur brandschutztechnisch sicheren Unterbringung beispielsweise einer Elektroinstallation 9 dienen.

Hierzu können mehrere Brandschutzbauelemente als Trennwand ausgebildet sein, wobei zur Gewährleistung der Brandschutzfunktion und der Dichtheit jeweils die Brandschutzplattenelemente 3 und die Metallplatten 4 miteinander dicht verbunden sind (siehe Figur 3).

Um einen auf diese Weise erstellten Installationsraum betreten zu können bzw. von außen zugänglich zu halten, ist ferner gemäß Figur 2 vorteilhaft vorgesehen, dass die Trennwand ein aus mindestens einem Brandschutzplattenelement und mindestens einer Metallplatte 4 gebildetes Türelement 8 umfasst.

Um die brandschutztechnische Wirkung der erfindungsgemäßen Trennwand weiter zu verbessern, ist gemäß Figur 1 zwischen dem Brandschutzplattenelement 3 und der Metallplatte 4 ein Dämmschichtbildner 10 (beispielsweise Blähgraphit) angeordnet, der im Brandfall durch Aufschäumen ebenfalls zum Ablösen der Metallplatte 4 vom Brandschutzplattenelement 3 beiträgt.

Ferner ist insbesondere aus optischen Gründen vorgesehen, dass das Brandschutzplattenelement 3 in Richtung des ersten Raumbereiches 1 eine Beschichtung 11 aufweist. Diese kann wahlweise wiederum aus Metall (z. B. Edelstahl) oder einem sonstigen, geeigneten Material bestehen.

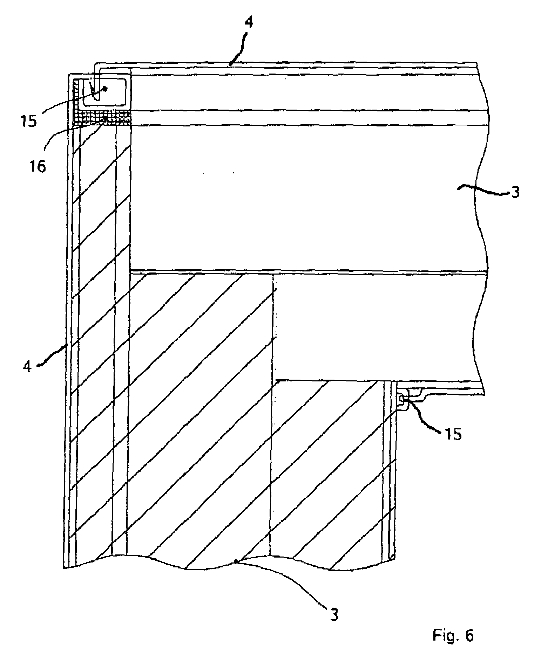

In Figur 6 ist eine Deckeneckkonstruktion dargestellt, bei der entsprechend ausgebildete Verbindungselemente 15 wie Klammern bzw. Einrastverschlüsse zur Verbindung des Wandelelements mit dem Deckenelement verwendet werden. Für die Dichtheit der Verbindung sorgt eine im Bereich des Verbindungselements 15 angeordnete dauerelastische Dichtmasse 16.

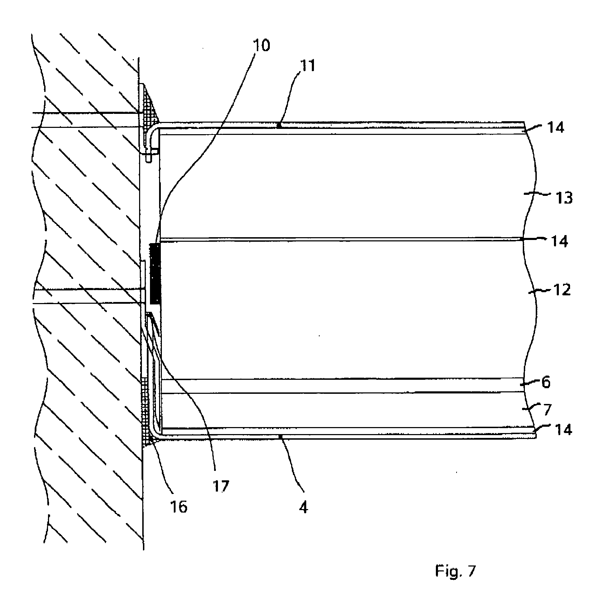

Figur 7 zeigt schließlich die Anbindung des Brandschutzbauelements beispielsweise an eine begrenzende Betonwand. Dabei greift der Rand der vorderen Metallplatte 4 in ein an der Betonwand befestigtes Anschlusselement 17 ein. Zwischen der Metallplatte 4 und der Betonwand ist zur Abdichtung eine dauerelastische Dichtmasse 16 vorgesehen. Ferner dient ein Dämmschichtbildner 10 im Brandfall zum Abdichten des Restspaltes zwischen Brandschutzbauelement und Betonwand. Auf der Rückseite des Brandschutzbauelements wird die in diesem Fall ebenfalls metallisch ausgebildete Beschichtung 11 (vorzugsweise eine Edelstahlplatte) zur weiteren mechanischen Anbindung an die Betonwand genutzt.

### Bezugszeichenliste

- 1: Raumbereich
- 2: Raumbereich
- 3: Brandschutzplattenelement
- 4: Metallplatte
- 5: Verbindungselement
- 6: erstes Verbindungselemententeil
- 7: zweites Verbindungselemententeil
- 8: Türelement
- 9: Elektroinstallation
- 10: Dämmschichtbildner
- 11: Beschichtung
- 12: Hochtemperaturdämmschicht
- 13: Niedertemperaturdämmschicht
- 14: Verklebung
- 15: Verbindungselement
- 16: Dichtmasse
- 17: Anschlusselement

## Patentansprüche

1. Brandschutzbauelement zur brandschutztechnischen Abgrenzung zweier Raumbereiche (1, 2) voneinander, umfassend ein zum einen Raumbereich (1) weisendes, mindestens feuerhemmend ausgebildetes Brandschutzplattenelement (3),
**dadurch gekennzeichnet,**
**dass** eine zum anderen Raumbereich (2) weisende, mittels mindestens eines Verbindungselements (5) am Brandschutzplattenelement (3) fest, aber lösbar angeordnete Metallplatte (4) vorgesehen ist.

2. Brandschutzbauelement nach Anspruch 1,
**dadurch gekennzeichnet,**
**dass** das Verbindungselement (5) zweiteilig ausgebildet ist, wobei ein erstes Teil (6) am Brandschutzplattenelement (3) und ein zweites Teil (7) an der Metallplatte (4) befestigt ist.

3. Brandschutzbauelement nach Anspruch 1 oder 2,
**dadurch gekennzeichnet,**
**dass** das Verbindungselement (5) aus Kunststoff gebildet ist.

4. Brandschutzbauelement nach einem der Ansprüche 1 bis 3,
**dadurch gekennzeichnet,**
**dass** das Verbindungselement (5) derart ausgebildet ist, dass ein Lösen der Metallplatte (4) von dem Brandschutzbauelement (3) bei einer genau vordefinierten Kraft erfolgt.

5. Brandschutzbauelement nach einem der Ansprüche 1 bis 4,
**dadurch gekennzeichnet,**
**dass** das Verbindungselement (5) mit dem Brandschutzbauelement (3) und mit der Metallplatte (4) verklebt ist.

6. Brandschutzbauelement nach einem der Ansprüche 1 bis 5,
**dadurch gekennzeichnet,**
**dass** das Brandschutzplattenelement (3) wahlweise aus Porenbeton oder einem Silikat-Baustoff gebildet ist.

7. Brandschutzbauelement nach einem der Ansprüche 1 bis 6,
**dadurch gekennzeichnet,**
**dass** die Metallplatte (4) mindestens 2 mm dick und vorzugsweise aus Edelstahl ausgebildet ist.

8. Trennwand aus Brandschutzbauelement nach einem der Ansprüche 1 bis 7,
**dadurch gekennzeichnet,**
**dass** die Trennwand aus mehreren Brarzdschutzbauelementen gebildet ist, wobei jeweils die Brandschutzplattenelemente (3) und die Metallplatten (4) miteinander dicht verbunden sind.

9. Trennwand nach Anspruch 8,
**dadurch gekennzeichnet,**
**dass** die Trennwand ein aus mindestens einem Brandschutzplattenelement und mindestens einer Metallplatte (4) gebildetes Türelement (8) umfasst.

10. Trennwand nach einem der Ansprüche 1 bis 9,
**dadurch gekennzeichnet,**
**dass** das Brandschutzplattenelement (3) mindestens zweischichtig, vorzugsweise aus einer Hoch- (12) und einer Niedertemperaturdämmschicht (13) ausgebildet ist.

11. Trennwand nach einem der Ansprüche 1 bis 10,
**dadurch gekennzeichnet,**
**dass** zwischen dem Brandschutzplattenelement (3) und der Metallplatte (4) ein Dämmschichtbildner (10) angeordnet ist.

12. Trennwand nach
**dadurch gekennzeichnet,**
**dass** das Brandschutzplattenelement (3) in Richtung des ersten Raumbereiches (1) eine Beschichtung (11) aufweist.
